# EUROPÄISCHE PATENTSCHRIFT

(11) **EP 4 133 468 B1**
(45) Veröffentlichungstag und Bekanntmachung des Hinweises auf die Patenterteilung: **24.07.2024**
(21) Anmeldenummer: 21715815.3
(22) Anmeldetag: 23.03.2021
(51) Int. Cl.: G08C 19/02

(54) **VERFAHREN ZUM ANBINDEN EINES FELDGERÄTS AN EINE CLOUD**
METHOD FOR CONNECTING A FIELD DEVICE TO A CLOUD
PROCÉDÉ DE CONNEXION D'UN DISPOSITIF DE TERRAIN À UN NUAGE

(30) Priorität: 07.04.2020 DE 102020109696
(43) Veröffentlichungstag der Anmeldung: 15.02.2023
(73) Patentinhaber: Endress+Hauser Process Solutions AG, 4153 Reinach (CH)
(72) Erfinder: MERKLIN, Simon, 79353 Bahlingen a. K. (DE); PÖSCHMANN, Axel, 4057 Basel (CH)
(74) Vertreter: Trenkle, Dennis
(86) Internationale Anmeldenummer: PCT/EP2021/057448
(87) Internationale Veröffentlichungsnummer: WO 2021/204533

(56) Entgegenhaltungen:
- US-A1- 2019 332 388

## Beschreibung

Die Erfindung betrifft ein Verfahren zum Anbinden eines Feldgeräts der Automatisierungstechnik an eine erste cloudbasierten Serviceplattform.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Normalerweise handelt es sich bei den übergeordneten Einheiten um Leitsysteme bzw. Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Heutzutage besteht Bedarf, die Daten der Feldgeräte auch an zentralen Stellen (bspw. cloudbasierte Serviceplattformen oder cloudbasierte Datenbank) via Internet zur Verfügung zu stellen, beispielsweise im Sinne von IIoT ("Industrial Internet of Things") oder Industrie 4.0. Hierfür stehen verschiedene Möglichkeiten zur Datenübermittlung zur Verfügung: Zum können die Daten der Feldgeräte, welche über die Kommunikationsnetzwerke übertragen werden, von einem sogenannten Edge Device mitgehört und beispielsweise über ein Mobilfunknetzwerk an die entsprechende zentrale Stelle übermittelt werden. Alternativ weisen die Feldgeräte selbst eine geeignete Kommunikationsschnittstelle auf (bspw. ein Funkmodul, insbesondere für UMTS, LTE oder 5G), über welche sie die Daten selbstständig an die entsprechende zentrale Stelle übermitteln.

Darüber hinaus besteht die Möglichkeit, dass ein Benutzer Daten des Feldgeräts mittels eines Bediengeräts erfasst und anschließend per Bediengerät an die zentrale Stelle übermittelt. Beispielsweise ist das dann sinnvoll, wenn das Feldgerät selbst keine geeignete Kommunikationsschnittstelle umfasst, sondern nur eine Kommunikationsschnittstelle zur lokalen Datenübertragung (bspw. via Bluetooth) besitzt. Dies stellt bei heutzutage erhältlichen Feldgeräten den üblichen Fall dar.

Um die Daten mittels des Bediengeräts an die zentrale Stelle übermitteln zu können, muss ein Kommunikationskanal zwischen Bediengerät und zentraler Stelle geschaffen werden. Hierfür muss der Bediener häufig selbstständig die Verbindungsparameter wie Adresse, etc. eingeben und die Authentifizierung vornehmen. Dies ist mitunter ein zeitaufwändiger Prozess.

Aus dem Stand der Technik sind Verfahren bekannt, mittels welchem sich IoT("Internet of Things")-Geräte selbstständig mit einer zentralen Stelle verbinden können, ohne dass der Benutzer hierfür eine Eingabe tätigen muss (ein sogenanntens "Zero-Touch-Verfahren"). Als Beispiel sei das "Secure-Device-Onboarding"(SDO)-Verfahren von Intel genannt (siehe beispielsweise https://software.intel.com/en-us/secure-device-onboard). Hierbei übernimmt ein zentraler SDO-Service die Zuordnung von Betreiber und Gerät bei der Inbetriebnahme des Geräts. Voraussetzung für dieses Verfahren ist ein loT-Gerät mit dauerhafter Anbindung an das Internet und einem bekannten SDO-Endpunkt als zentrale Stelle (bspw. mit Intel als Betreiber).

Ein Nachteil des SDO-Verfahrens besteht darin, dass das Verfahren nicht für Geräte funktioniert, die über keinen eigenen Internetzugang verfügen. Daher ist es für die meisten der heutzutage erhältlichen Feldgeräte nicht geeignet. Ein weiterer Nachteil besteht darin, dass die Adresse der zentralen Stelle des Kundens bereits bei der Produktion des Geräts bekannt sein muss und entsprechend im Gerät hinterlegt sein muss. Jedoch ist diese bei der Produktion des Geräts mitunter noch nicht bekannt, da diese kundenspezifisch ist. Ein nachträgliches Ändern der im Gerät hinterlegten zentralen Stelle des Kundens, welche der SDO-Service zur Zuordnung benötigt, würde jedoch eine unerwünschte Konfiguration im Gerät darstellen.

Die US 2019/332388 A1 offenbart ein Verfahren, in welchem ein Feldgerät mittels eines Bediengeräts in Betrieb genommen wird, wobei das Bediengerät hierfür einen statischen Code und einen dynamischen Code betreffend Daten des Feldgeräts optisch ausliest.

Der Erfindung liegt die Aufgabe zugrunde, ein Verfahren vorzustellen, welches ein einfaches erstmaliges Anbinden eines Feldgeräts der Automatisierungstechnik an eine cloudbasierte Serviceplattform ermöglicht, wobei das Feldgerät über keinen eigenen Internetzugang verfügt.

Die Aufgabe wird durch ein Verfahren zum Anbinden eines Feldgeräts der Automatisierungstechnik an eine erste cloudbasierten Serviceplattform gelöst, umfassend:
- Etablieren einer Kommunikationsverbindung zwischen einem ersten Bediengerät und dem Feldgerät;
- Auslesen eines ersten Tickets aus dem Feldgerät mittels des ersten Bediengeräts über die etablierte Kommunikationsverbindung zwischen dem ersten Bediengerät und dem Feldgerät, wobei das erste Ticket als Inhalt zumindest eine das Feldgerät eindeutig identifizierende Information umfasst;
- Etablieren einer Kommunikationsverbindung zwischen einem ersten Bediengerät und einer zweiten cloudbasierte Serviceplattform, wobei die zweite Serviceplattform ein zweites Ticket aufweist, wobei das zweite Ticket als Inhalt zumindest Kundendaten und Verbindungsinformationen bezüglich der ersten cloudbasierten Serviceplattform aufweist;
- Übermitteln des ersten Tickets an die zweite cloudbasierte Serviceplattform von dem ersten Bediengerät über die etablierte Kommunikationsverbindung zwischen dem ersten Bediengerät und der zweiten cloudbasierten Serviceplattform;
- Gegenseitiges Zuordnen des ersten Tickets und des zweiten Tickets anhand der jeweiligen Inhalte und Verifizieren des ersten und des zweiten Tickets;
- Im Falle des erfolgreichen Verifizierens, Übermitteln der Verbindungsinformationen bezüglich der ersten cloudbasierten Serviceplattform von der zweiten cloudbasierten Serviceplattform an das erste Bediengerät über die etablierte Kommunikationsverbindung zwischen dem ersten Bediengerät und der zweiten cloudbasierten Serviceplattform; und
- Etablieren einer Kommunikationsverbindung zwischen dem ersten Bediengerät und der ersten cloudbasierten Serviceplattform auf Basis der von der zweiten Serviceplattform übermittelten Verbindungsinformationen.

Das erfindungsgemäße Verfahren erlaubt ein Anmelden eines Feldgeräts an einer ersten cloudbasierten Serviceplattform, ohne dass der Kunde hierfür Eingaben tätigen muss. Hierfür wird vorab ein Ticketpaar erzeugt. Das erste Ticket wird insbesondere im Zuge der Produktion auf dem Feldgerät gespeichert. Das zweite Ticket wird insbesondere bei der Bestellung des Feldgeräts durch den Kunden erstellt. Hierfür wird gibt der Kunde bei der Bestellung Informationen über die gewünschte cloudbasierte Serviceplattform an, an welche die Daten seines bestellten Feldgeräts übermittelt werden sollen.

Nur durch das Zusammenspiel beider Tickets wird dem ersten Bediengerät die Verbindungsinformation mitgeteilt, welcher dieses benötigt, um eine Kommunikationsverbindung mit der ersten Serviceplattform herstellen zu können.

Feldgeräte, welche im Zusammenhang mit dem erfindungsgemäßen Verfahren beschrieben werden, sind bereits im einleitenden Teil der Beschreibung beispielhaft aufgeführt.

Als "cloudbasiert" wird im Zusammenhang mit der Erfindung eine Serviceplattform bezeichnet, welche auf einem Server implementiert ist und über das Internet kontaktierbar ist. Auf der Serviceplattform kann eine Datenbank implementiert sein, sowie Applikationen abrufbar sein, welche auf die Datenmenge der Datenbank zugreifen können und diese verarbeiteten, bzw. verwerten können. Diese Applikationen sind für den Benutzer über ein Webinterface nutzbar.

Gemäß einer vorteilhaften Ausgestaltung umfasst das erfindungsgemäße Verfahren zusätzlich die folgenden Verfahrensschritte:
- Übermitteln von Daten des Feldgeräts, insbesondere Diagnosedaten, Statusdaten und/oder Messwerte physikalischer Größen eines verfahrenstechnischen Prozesses an das erste Bediengerät über die etablierte Kommunikationsverbindung zwischen dem ersten Bediengerät und dem Feldgerät;
- Übermitteln der Daten des Feldgeräts von dem ersten Bediengerät an die erste cloudbasierte Serviceplattform über die etablierte Kommunikationsverbindung zwischen dem ersten Bediengerät und der ersten cloudbasierten Serviceplattform.

Nachdem die Kommunikationsverbindung zwischen dem ersten Bediengerät und der ersten cloudbasierten Serviceplattform etabliert wurde, können über diese die von dem Feldgerät abgerufenen Daten übertragen werden. Die Art der von dem Feldgerät übermittelten Daten ist nicht erschöpfend genannt. Es versteht sich von selbst, das beliebige weitere Typen/Arten von Daten von dem Feldgerät übermittelbar sind.

Gemäß einer vorteilhaften Ausgestaltung des erfindungsgemäßen Verfahrens ist vorgesehen, dass die Verbindungsinformationen bezüglich der ersten cloudbasierten Serviceplattform über die etablierte Kommunikationsverbindung zwischen dem ersten Bediengerät und dem Feldgerät an das Feldgerät übermittelt und in dem Feldgerät gespeichert werden. Da das Feldgerät üblicherweise bereits vor der Bestellung durch den Kunden produziert wird, ist die Verbindungsinformation nicht vorab in das Feldgerät speicherbar. Dieser Verfahrensschritt ermöglicht es, die Verbindungsinformationen nach Inbetriebnahme des Feldgeräts, bzw. nach erstmaliger Anbindung in der erste Serviceplattform, in dem Feldgerät zu speichern.

Gemäß einer ersten vorteilhaften Variante des erfindungsgemäßen Verfahrens ist vorgesehen, dass das erfindungsgemäße Verfahren zusätzlich die folgenden Verfahrensschritte umfasst:
- Etablieren einer Kommunikationsverbindung zwischen einem zweiten Bediengerät und dem Feldgerät;
- Übermitteln der gespeicherten Verbindungsinformationen bezüglich der ersten cloudbasierten Serviceplattform von dem Feldgerät an das zweite Bediengerät über die etablierte Kommunikationsverbindung zwischen dem zweiten Bediengerät und dem Feldgerät;
- Etablieren einer Kommunikationsverbindung zwischen dem zweiten Bediengerät und der ersten cloudbasierten Serviceplattform auf Basis der von dem Feldgerät übermittelten Verbindungsinformationen.

Die nachträglich in dem Feldgerät gespeicherte Verbindungsinformation kann also dazu genutzt werden, um auf einfache Art und Weise die Anbindung eines weiteren Bediengeräts an die erste Serviceplattform zu ermöglichen. Das zweite Bediengerät muss sich hierfür nicht erst noch mit der zweiten Serviceplattform verbinden, wodurch Zeit eingespart werden kann.

Gemäß einer vorteilhaften Weiterbildung des erfindungsgemäßen Verfahrens ist vorgesehen, dass das erste Bediengerät eine Anwendungsapplikation zum Steuern der von dem ersten Bediengerät initiierten Verfahrensschritte mit einer online-Benutzerverwaltung aufweist, wobei der Benutzer vor Ausführung des Verfahrens sich gegenüber der Anwendungsapplikation authentifiziert und wobei die Verbindungsinformationen bezüglich der ersten cloudbasierten Serviceplattform dem Benutzer zugeordnet in der online-Benutzerverwaltung gespeichert werden.

Die online-Benutzerverwaltung ist hierbei entweder in der zweiten cloudbasierten Serviceplattform integriert oder auf einem beliebigen weiteren, von der zweiten cloudbasierten Serviceplattform unabhängigen, Server implementiert. Der Benutzer authentifiziert sich beispielsweise mittels Eingabe eines Benutzernamens und Passworts, per Erfassen zumindest einer biometrischen Eigenschaft des Benutzers via dem ersten Bediengerät oder einer ähnlichen Authentifizierungsmethode.

Die online-Benutzerverwaltung dient dem Zweck, Rechte des Bedieners zu speichern, also beispielsweise, mit welchen Feldgeräten er über die Anwendungsapplikation Zugriff auf welche cloudbasierte Serviceplattform besitzt.

Gemäß einer zweiten vorteilhaften Variante des erfindungsgemäßen Verfahrens ist vorgesehen, dass das erfindungsgemäße Verfahren zusätzlich die folgenden Verfahrensschritte umfasst:
- Bereitstellen eines zweiten Bediengeräts, welches zweite Bediengerät die Anwendungsapplikation ausführt;
- Authentifizieren des Benutzers gegenüber der Anwendungsapplikation;
- Etablieren einer Kommunikationsverbindung zwischen dem zweiten Bediengerät und dem Feldgerät;
- Bereitstellen der Verbindungsinformationen bezüglich der ersten cloudbasierten Serviceplattform dem zweiten Bediengerät durch die online-Benutzerverwaltung; und
- Etablieren einer Kommunikationsverbindung zwischen dem zweiten Bediengerät und der ersten cloudbasierten Serviceplattform auf Basis der bereitgestellten Verbindungsinformationen.

Die Anwendungsapplikation ist auf mehreren Bediengeräten abrufbar. Durch Authentifizieren des Benutzers, wie oben beschrieben, gelten auf allen Bediengeräten des Benutzers dieselben Zugriffsrechte auf Feldgeräte und Serviceplattformen.

Eine vorteilhafte Ausgestaltung der ersten oder der zweiten Variante des erfindungsgemäßen Verfahrens umfasst die weiteren Verfahrensschritte:
- Übermitteln von Daten des Feldgeräts, insbesondere Diagnosedaten, Statusdaten und/oder Messwerte physikalischer Größen eines verfahrenstechnischen Prozesses an das zweite Bediengerät über die etablierte Kommunikationsverbindung zwischen dem zweiten Bediengerät und dem Feldgerät; und
- Übermitteln der Daten des Feldgeräts von dem zweiten Bediengerät an die erste cloudbasierte Serviceplattform über die etablierte Kommunikationsverbindung zwischen dem zweiten Bediengerät und der ersten cloudbasierten Serviceplattform.

Unabhängig von der Art und Weise, wie sich das zweite Bediengerät mit der ersten cloudbasierten Serviceplattform verbindet, bzw. eine Kommunikationsverbindung mit dieser aufbaut, kann das zweite Bediengerät anschließend ebenfalls die Daten des Feldgeräts an die erste Serviceplattform übermitteln. Es versteht sich von selbst, dass im Prinzip beliebig viele weitere Bediengeräte mit der ersten Serviceplattform "gekoppelt" werden können, um Daten des Feldgeräts an die erste Serviceplattform zu übermitteln.

Gemäß einer vorteilhaften Weiterbildung des erfindungsgemäßen Verfahrens ist vorgesehen, dass ein Schlüsselpaar herstellerseitig während des Fertigungsprozesses des Feldgeräts erstellt wird, wobei ein privater Schlüssel als Bestandteil des Schlüsselpaars während der Fertigung auf das Feldgerät geschrieben wird, und wobei das erste Ticket mittels des privaten Schlüssels signiert wird. Der private Schlüssel ist hierbei nur dem ersten Feldgerät bekannt und fest in dieses geschrieben, also ist daher unveränderlich, bzw. für einen Benutzer nicht auslesbar.

Gemäß einer vorteilhaften Ausgestaltung des erfindungsgemäßen Verfahrens ist vorgesehen, dass das zweite Ticket herstellerseitig bei der Bestellung des Feldgeräts erstellt wird, und wobei das zweite Ticket mittels eines öffentlichen Schlüssels als Bestandteil des Schlüsselpaars signiert wird. Die öffentlichen Schlüssel verschiedener Feldgeräte können hierzu in einem zentralen Schlüsselverzeichnis gespeichert sind und mit der jeweiligen Identifikationsinformation ihres zugehörigen Feldgeräts zugeordnet sein. Im Zuge der Bestellung des Feldgeräts - und der damit einhergehenden Erstellung des zweiten Tickets - wird der entsprechende öffentliche Schlüssel abgerufen und verwendet, um das zweite Ticket zu signieren.

Gemäß einer vorteilhaften Ausgestaltung des erfindungsgemäßen Verfahrens ist vorgesehen, dass im Zuge des Verifizierens ein gegenseitiges Überprüfen der jeweiligen Signatur des ersten Tickets und des zweiten Tickets erfolgt, und wobei das Verifizieren nur dann erfolgreich ist, wenn die Signaturen jeweils erfolgreich überprüft werden. Nur in diesem Falle sind die beiden Tickets jeweils passend zueinander, bzw. besitzt der Benutzer tatsächlich das Feldgerät.

Gemäß einer vorteilhaften Ausgestaltung des erfindungsgemäßen Verfahrens ist vorgesehen, dass sich das erste Bediengerät, bzw. das zweite Bediengerät, gegenüber dem Feldgerät im Zuge des Etablierens der Kommunikationsverbindung zwischen dem ersten Bediengerät und dem Feldgerät, bzw. im Zuge des Etablierens der Kommunikationsverbindung zwischen dem zweiten Bediengerät und dem Feldgerät, erfolgreich authentifizieren muss. Dies erfolgt beispielsweise durch Eingabe eines Authentifizierungsmerkmals (bspw. eines Codes eines Benutzernamens und Passworts und/oder durch Erfassen eines biometrischen Merkmals) in das entsprechende Bediengerät, bzw. mittels des entsprechenden Bediengeräts. Das Feldgerät prüft das Authentifizierungsmerkmal und genehmigt, bzw. sperrt, den Zugang entsprechend.

Gemäß einer vorteilhaften Ausgestaltung des erfindungsgemäßen Verfahrens ist vorgesehen, dass das erste Bediengerät, bzw. das zweite Bediengerät, über eine Funkverbindung oder eine drahtgebundene Verbindung mit dem Feldgerät verbunden wird. Hierbei handelt es sich beispielsweise um eine Bluetooth-Verbindung oder eine WiFi-/WLAN-Verbindung. Das Feldgerät und das entsprechende Bediengerät weisen hierfür entsprechende Kommunikationsschnittstellen auf.

Gemäß einer vorteilhaften Ausgestaltung des erfindungsgemäßen Verfahrens ist vorgesehen, dass das erste Bediengerät, bzw. das zweite Bediengerät die Kommunikationsverbindung zu der ersten cloudbasierten Serviceplattform und/oder zu der zweiten cloudbasierten Serviceplattform über das Internet etabliert. Das entsprechende Bediengerät weist hierfür zumindest eine Kommunikationsschnittstelle auf, um die Daten zu übertragen. Beispielsweise wird eine mobile Datenverbindung (UMTS, LTE, 5G) oder eine WiFi-/WLAN-Verbindung verwendet.

Gemäß einer vorteilhaften Ausgestaltung des erfindungsgemäßen Verfahrens ist vorgesehen, dass als erstes Bediengerät, bzw. als zweites Bediengerät, ein mobiles Endgerät, insbesondere ein Smartphone oder Tablet, oder eine Rechnereinheit, insbesondere ein Laptop verwendet wird. Es kann sich auch um eine Bedieneinheit im Sinne des von der Anmelderin produzierten und vertriebenen "Field Xperts" handeln.

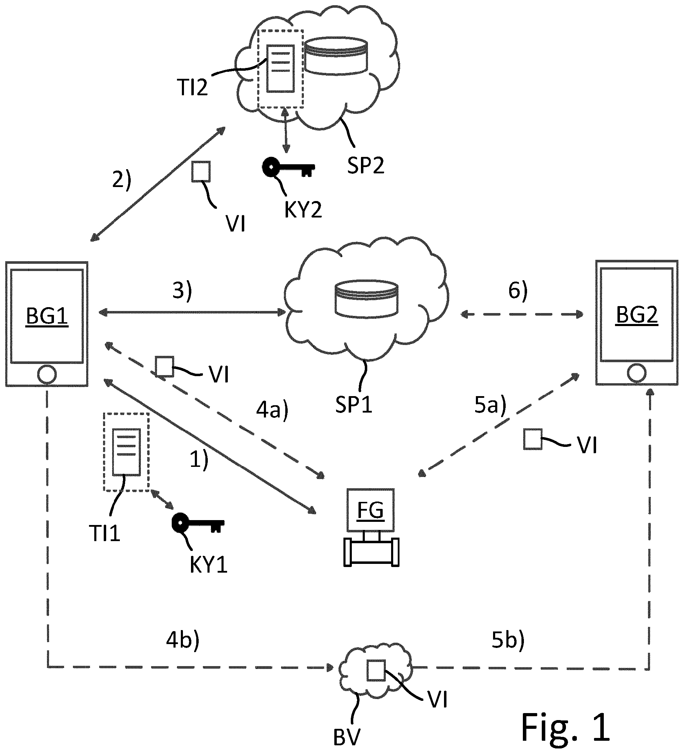

Die Erfindung wird anhand der nachfolgenden Figur näher erläutert. Es zeigt
Fig. 1: ein Ausführungsbeispiel des erfindungsgemäßen Verfahrens.

In Fig. 1 ist ein Feldgerät FG abgebildet. Bei dem Feldgerät FG handelt es sich im vorliegenden Fall um ein Messgerät zum Erfassen der Durchflussgeschwindigkeit eines fluiden Mediums in einer Rohrleitung. Das erfindungsgemäße Verfahren ist jedoch auf jeden beliebigen Typ Feldgerät anwendbar. So kann es sich bei dem Feldgerät FG wie im vorliegenden Fall um ein Messgerät zum Erfassen physikalischer Messgrößen eines verfahrenstechnischen Prozesses oder ab um einen Aktor zum Beeinflussen physikalischer Messgrößen eines verfahrenstechnischen Prozesses handeln. Alternativ kann es sich bei dem Feldgerät FG um ein feld-, bzw. prozessnahes Datenverarbeitungs- oder Netzwerkgerät handeln, beispielsweis eine Steuerungseinheit, ein Gateway oder einen Flowcomputer.

Das Feldgerät FG ist in eine (hier nicht abgebildete) Messstelle eingebaut und mit einem Kommunikationsnetzwerk der Anlage verbunden. Die von dem Feldgerät FG ermittelten Durchflussgeschwindigkeitsmesswerte werden über das Kommunikationsnetzwerk an eine Steuerungseinheit übermittelt und von dieser Steuereinheit an die Leitstellte der Anlage übermittelt.

Das Feldgerät FG generiert neben den Messwerten noch weitere Daten, welche mit den Messwerten per Internet an eine erste cloudbasierte Serviceplattform SP1, beispielsweise ein Asset Management System, übermittelt werden sollen. Das Feldgerät FG weist selbst jedoch keinen Internetzugang auf, sondern besitzt lediglich eine Funkschnittstelle zum Auslesen/Übermitteln der Daten, beispielsweise basierend auf Bluetooth LE. Es ist daher vorgesehen, die Daten an ein erste Bediengerät BG1 zu übermitteln, welches die Daten dann per Internet an die erste cloudbasierte Serviceplattform SP1 übermittelt. Bei dem ersten Bediengerät BG1 handelt es sich im vorliegenden Fall um ein Smartphone, auf welchem eine App (Anwendungsapplikation) abläuft, mittels welcher diejenigen Schritte des nachfolgend beschriebenen Verfahrens durchgeführt werden, welche das erste Bediengerät BG1 betreffen.

Damit der Benutzer nur wenige Schritte selbst durchführen müssen, damit die Daten des Feldgeräts FG per erstem Bediengerät BG1 auf die erste cloudbasierte Serviceplattform geladen werden, wird das erfindungsgemäße Verfahren durchgeführt:
In einem ersten Verfahrensschritt 1) koppelt der Benutzer das erste Bediengerät per Funk mit dem Feldgerät FG und etabliert dadurch eine Kommunikationsverbindung. Auf der App des Smartphones wird hierfür manuell das Verfahren initiiert. Im Zuge des Koppelns kann es vorgesehen sein, dass sich der Benutzer über das erste Bediengerät BG1 vor dem Feldgerät authentifiziert, bspw. per Codeeingabe. Anschließend liest das erste Bediengerät BG1 ein erste Ticket TI1 aus dem Feldgerät FG aus. Das erste Ticket wurde während der Produktion erstellt, mittels eines nur dem Feldgerät FG zugänglichen privaten Schlüssels KY1 signiert, in das Feldgerät FG geschrieben und enthält eine Identifikationsinformation des Feldgeräts FG, beispielsweise eine Seriennummer.

In einem zweiten Verfahrensschritt 2) verbindet sich das erste Bediengerät BG1 per Internet mit einer zweiten cloudbasierten Serviceplattform SP2 und etabliert dadurch eine Kommunikationsverbindung. Es kann vorgesehen sein, dass sich der Benutzer mittels des ersten Bediengeräts BG gegenüber der zweiten cloudbasierten Serviceplattform SP2 authentifiziert. Bei der zweiten cloudbasierten Serviceplattform SP2 handelt es sich insbesondere um eine Bestell-/Serviceplattform des Feldgeräteherstellers. Das zweite Bediengerät BG1 übermittelt das erste Ticket TI1 an die zweite cloudbasierte Serviceplattform SP2. Auf der zweiten cloudbasierte Serviceplattform SP2 ist ein zweites Ticket TI2 abgelegt, welches während der Bestellung des Feldgeräts FG erstellt wurde und mittels eines öffentlichen, zum privaten Schlüssel KY1 korrespondierenden Schlüssels KY2 signiert wurde. Das zweite Ticket umfasst insbesondere Kundendaten und eine Verbindungsinformation VI zu der ersten cloudbasierten Serviceplattform. Die Verbindungsinformation VI wurde während des Bestellvorgangs von dem Kunden eingetragen und enthält beispielsweise die Webadresse der ersten cloudbasierten Serviceplattform SP1 und Login-Daten.

Die zweite cloudbasierte Serviceplattform führt eine gegenseitige Prüfung der signierten Tickets TI1, TI2 durch. Hierfür erfolgt eine Prüfung der Signatur der Tickets mit dem Schlüssel KY2, da dieser beide Signaturen entschlüsseln kann. Im Falle, dass sich die Tickets TI1, TI2 gegenseitig verifizieren konnten, wird die Verbindungsinformation VI von der zweiten cloudbasierten Serviceplattform SP2 an das erste Bediengerät BG übermittelt.

In einem dritten Verfahrensschritt 3) verbindet sich das erste Bediengerät BG1 unter Nutzung der Verbindungsinformation VI mit der ersten cloudbasierten Serviceplattform SP1 und etabliert dadurch eine Kommunikationsverbindung. Anschließend kann das erste Bediengerät BG1 die Daten des Feldgeräts FG auslesen, bzw. das Feldgerät FG übermittelt die Daten an das erste Bediengerät BG1. Die Daten werden anschließend von dem ersten Bediengerät BG1 an die erste cloudbasierte Serviceplattform übermittelt und auf dieser gespeichert, bzw. von dieser gespeichert.

Das erfindungsgemäße Verfahren bietet dem Benutzer/Kunden somit die Möglichkeit, sein Feldgerät FG auf einfache Art und Weise an die erste Serviceplattform anzubinden, im Sinne von "Zero Touch".

Der Benutzer/Kunde kann auch weitere Bediengeräte verwenden, um nach der ersten Anbindung des Feldgeräts FG an die erste cloudbasierte Serviceplattform Daten des Feldgeräts FG an die erste cloudbasierte Serviceplattform SP zu übermitteln. Hierfür stehen zwei Alternativen zur Verfügung:
In der ersten Variante speichert das erste Bediengerät BG1 in einem Verfahrensschritt 4a) die von der zweiten cloudbasierten Serviceplattform SP2 erhaltene Verbindungsinformation VI auf dem Feldgerät FG. Ein zweites Bediengerät BG2 kann diese in einem Verfahrensschritt 5a) anschließend, nachdem sich dieses gegenüber dem Feldgerät FG authentifiziert hat, aus dem Feldgerät FG auslesen.

In der zweiten Variante nutzt die Anwendungsapplikation des ersten Bediengeräts eine online-Benutzerverwaltung BV. Diese ist entweder auf der zweiten cloudbasierten Serviceplattform SP2 oder auf einer weiteren Serviceplattform integriert. Beim Starten der Anwendungsapplikation loggt sich der Benutzer in die online-Benutzerverwaltung BV. Nur wenn er sich einloggen kann, kann er das obig beschriebene erfindungsgemäße Verfahren überhaupt durchführen (also das erstmalige Anbinden des Feldgeräts FG an die erste cloudbasierte Serviceplattform SP1).

Das erste Bediengerät BG1 übermittelt in einem Verfahrensschritt 4b) die von der zweiten cloudbasierten Serviceplattform SP2 erhaltene Verbindungsinformation VI an die online-Benutzerverwaltung BV, welche die Verbindungsinformation VI anschließend speichert.

Der Benutzer muss sich nun mittels eines zweiten Bediengeräts BG, auf welchem die Anwendungsapplikation ebenfalls abläuft, in die online-Benutzerverwaltung BV einloggen. Anschließend übermittelt in einem Verfahrensschritt 5b) die online-Benutzerverwaltung BV die Verbindungsinformation VI an das zweite Bediengerät BG2.

Nachdem das zweite Bediengerät BG2 die Verbindungsinformation VI erhalten hat - unabhängige durch welche Variante des Verfahrens - kann dieses analog zu Verfahrensschritt 3) eine Kommunikationsverbindung mit der ersten cloudbasierten Serviceplattform SP1 etablieren und die Daten des Feldgeräts FG analog zu Verfahrensschritt 3) an die erste cloudbasierte Serviceplattform SP1 übermitteln.

### Bezugszeichenliste

- 1, 2, ..., 6: Verfahrensschritte
- BG1, BG2: Bediengeräte
- BV: online-Benutzerverwaltung
- FG: Feldgerät
- KY1, KY2: Schlüsselpaar, bestehend aus privatem Schlüssel und öffentlichem Schlüssel
- SP1, SP2: Serviceplattformen
- TI1, TI2: Tickets
- VI: Verbindungsinformationen

## Patentansprüche

1. Verfahren zum Anbinden eines Feldgeräts (FG) der Automatisierungstechnik an eine erste cloudbasierten Serviceplattform (SP1), umfassend:
- Etablieren einer Kommunikationsverbindung zwischen einem ersten Bediengerät (BG1) und dem Feldgerät (FG);
- Auslesen eines ersten Tickets (TI1) aus dem Feldgerät (FG) mittels des ersten Bediengeräts (BG1) über die etablierte Kommunikationsverbindung zwischen dem ersten Bediengerät (BG1) und dem Feldgerät (FG), wobei das erste Ticket (TI1) als Inhalt zumindest eine das Feldgerät (FG) eindeutig identifizierende Information umfasst;
**dadurch gekennzeichnet, dass** das Verfahren die folgenden Schritte umfasst:
- Etablieren einer Kommunikationsverbindung zwischen einem ersten Bediengerät (BG1) und einer zweiten cloudbasierte Serviceplattform (SP2), wobei die zweite Serviceplattform (SP2) ein zweites Ticket (TI2) aufweist, wobei das zweite Ticket (TI2) als Inhalt zumindest Kundendaten und Verbindungsinformationen (VI) bezüglich der ersten cloudbasierten Serviceplattform (SP1) aufweist;
- Übermitteln des ersten Tickets (TI1) an die zweite cloudbasierte Serviceplattform (SP2) von dem ersten Bediengerät (BG1) über die etablierte Kommunikationsverbindung zwischen dem ersten Bediengerät (BG1) und der zweiten cloudbasierten Serviceplattform (SP2);
- Gegenseitiges Zuordnen des ersten Tickets (TI1) und des zweiten Tickets (TI2) anhand der jeweiligen Inhalte und Verifizieren des ersten Tickets (TI1) und des zweiten Tickets (TI2);
- Im Falle des erfolgreichen Verifizierens, Übermitteln der Verbindungsinformationen (VI) bezüglich der ersten cloudbasierten Serviceplattform (SP1) von der zweiten cloudbasierten Serviceplattform (SP2) an das erste Bediengerät (BG1) über die etablierte Kommunikationsverbindung zwischen dem ersten Bediengerät (BG1) und der zweiten cloudbasierten Serviceplattform (SP2); und
- Etablieren einer Kommunikationsverbindung zwischen dem ersten Bediengerät (BG1) und der ersten cloudbasierten Serviceplattform (SP1) auf Basis der von der zweiten Serviceplattform (SP2) übermittelten Verbindungsinformationen (VI).

2. Verfahren nach Anspruch 1, weiter umfassend:
- Übermitteln von Daten des Feldgeräts (FG), insbesondere Diagnosedaten, Statusdaten und/oder Messwerte physikalischer Größen eines verfahrenstechnischen Prozesses an das erste Bediengerät (BG1) über die etablierte Kommunikationsverbindung zwischen dem ersten Bediengerät (BG1) und dem Feldgerät (FG);
- Übermitteln der Daten des Feldgeräts (FG) von dem ersten Bediengerät (BG1) an die erste cloudbasierte Serviceplattform (SP1) über die etablierte Kommunikationsverbindung zwischen dem ersten Bediengerät (BG1) und der ersten cloudbasierten Serviceplattform (SP1).

3. Verfahren nach zumindest einem der Ansprüche 1 oder 2, wobei die Verbindungsinformationen (VI) bezüglich der ersten cloudbasierten Serviceplattform (SP1) über die etablierte Kommunikationsverbindung zwischen dem ersten Bediengerät (BG1) und dem Feldgerät (FG) an das Feldgerät (FG) übermittelt und in dem Feldgerät (FG) gespeichert werden.

4. Verfahren nach Anspruch 3, weiter umfassend:
- Etablieren einer Kommunikationsverbindung zwischen einem zweiten Bediengerät (BG2) und dem Feldgerät (FG);
- Übermitteln der gespeicherten Verbindungsinformationen (VI) bezüglich der ersten cloudbasierten Serviceplattform (SP1) von dem Feldgerät (FG) an das zweite Bediengerät (BG2) über die etablierte Kommunikationsverbindung zwischen dem zweiten Bediengerät (BG2) und dem Feldgerät (FG);
- Etablieren einer Kommunikationsverbindung zwischen dem zweiten Bediengerät (BG2) und der ersten cloudbasierten Serviceplattform (SP1) auf Basis der von dem Feldgerät (FG) übermittelten Verbindungsinformationen (VI).

5. Verfahren nach zumindest einem der Ansprüche 1 oder 2, wobei das erste Bediengerät (BG1) eine Anwendungsapplikation zum Steuern der von dem ersten Bediengerät (BG1) initiierten Verfahrensschritte mit einer online-Benutzerverwaltung (BV) aufweist, wobei der Benutzer vor Ausführung des Verfahrens sich gegenüber der Anwendungsapplikation authentifiziert und wobei die Verbindungsinformationen (VI) bezüglich der ersten cloudbasierten Serviceplattform (SP1) dem Benutzer zugeordnet in der online-Benutzerverwaltung (BV) gespeichert werden.

6. Verfahren nach Anspruch 5, weiter umfassend:
- Bereitstellen eines zweiten Bediengeräts (BG2), welches zweite Bediengerät (BG2) die Anwendungsapplikation ausführt;
- Authentifizieren des Benutzers gegenüber der Anwendungsapplikation;
- Etablieren einer Kommunikationsverbindung zwischen dem zweiten Bediengerät (BG2) und dem Feldgerät (FG);
- Bereitstellen der Verbindungsinformationen (VI) bezüglich der ersten cloudbasierten Serviceplattform (SP1) dem zweiten Bediengerät (BG2) durch die online-Benutzerverwaltung (BV); und
- Etablieren einer Kommunikationsverbindung zwischen dem zweiten Bediengerät (BG2) und der ersten cloudbasierten Serviceplattform (SP1) auf Basis der bereitgestellten Verbindungsinformationen (VI).

7. Verfahren nach Anspruch 4 oder 6, weiter umfassend:
- Übermitteln von Daten des Feldgeräts (FG), insbesondere Diagnosedaten, Statusdaten und/oder Messwerte physikalischer Größen eines verfahrenstechnischen Prozesses an das zweite Bediengerät (BG2) über die etablierte Kommunikationsverbindung zwischen dem zweiten Bediengerät (BG2) und dem Feldgerät (FG); und
- Übermitteln der Daten des Feldgeräts (FG) von dem zweiten Bediengerät (BG2) an die erste cloudbasierte Serviceplattform (SP1) über die etablierte Kommunikationsverbindung zwischen dem zweiten Bediengerät (BG2) und der ersten cloudbasierten Serviceplattform (SP1).

8. Verfahren nach zumindest einem der vorherigen Ansprüche, wobei ein Schlüsselpaar (KY1, KY2) herstellerseitig während des Fertigungsprozesses des Feldgeräts (FG) erstellt wird, wobei ein privater Schlüssel (KY1) als Bestandteil des Schlüsselpaars (KY1, KY2) während der Fertigung auf das Feldgerät (FG) geschrieben wird, und wobei das erste Ticket (TI1) mittels des privaten Schlüssels (KY1) signiert wird.

9. Verfahren nach Anspruch 8, wobei das zweite Ticket (TI2) herstellerseitig bei der Bestellung des Feldgeräts (FG) erstellt wird, und wobei das zweite Ticket (TI2) mittels eines öffentlichen Schlüssels (KY2) als Bestandteil des Schlüsselpaars (KY1, KY2) signiert wird.

10. Verfahren nach Anspruch 9, wobei im Zuge des Verifizierens ein gegenseitiges Überprüfen der jeweiligen Signatur des ersten Tickets (TI1) und des zweiten Tickets (TI2) erfolgt, und wobei das Verifizieren nur dann erfolgreich ist, wenn die Signaturen jeweils erfolgreich überprüft werden.

11. Verfahren nach zumindest einem der vorherigen Ansprüche, wobei sich das erste Bediengerät (BG1), bzw. das zweite Bediengerät (BG2), gegenüber dem Feldgerät (FG) im Zuge des Etablierens der Kommunikationsverbindung zwischen dem ersten Bediengerät (BG1) und dem Feldgerät (FG), bzw. im Zuge des Etablierens der Kommunikationsverbindung zwischen dem zweiten Bediengerät (BG2) und dem Feldgerät (FG), erfolgreich authentifizieren muss.

12. Verfahren nach zumindest einem der vorherigen Ansprüche, wobei das erste Bediengerät (BG1), bzw. das zweite Bediengerät (BG2), über eine Funkverbindung oder eine drahtgebundene Verbindung mit dem Feldgerät (FG) verbunden wird.

13. Verfahren nach zumindest einem der vorherigen Ansprüche, wobei das erste Bediengerät (BG1), bzw. das zweite Bediengerät (BG2) die Kommunikationsverbindung zu der ersten cloudbasierten Serviceplattform (SP1) und/oder zu der zweiten cloudbasierten Serviceplattform (SP2) über das Internet etabliert.

14. Verfahren nach zumindest einem der vorherigen Ansprüche, wobei als erstes Bediengerät (BG1), bzw. als zweites Bediengerät (BG2), ein mobiles Endgerät, insbesondere ein Smartphone oder Tablet, oder eine Rechnereinheit, insbesondere ein Laptop verwendet wird.

## Claims

1. Method for connecting a field device (FG) of automation technology to a first cloud-based service platform (SP1), comprising:
- Establishing a communication connection between a first operating device (BG1) and the field device (FG);
- Reading out a first ticket (Tl1) from the field device (FG) by means of the first operating device (BG1) via the established communication link between the first operating device (BG1) and the field device (FG), wherein the first ticket (TI1) comprises as content at least one piece of information that uniquely identifies the field device (FG);
**characterized in that** the method comprises the following steps:
- Establishing a communication connection between a first operating device (BG1) and a second cloud-based service platform (SP2), wherein the second service platform (SP2) has a second ticket (TI2), wherein the second ticket (TI2) has as content at least customer data and connection information (VI) relating to the first cloud-based service platform (SP1);
- Transmitting the first ticket (TI1) to the second cloud-based service platform (SP2) from the first operating device (BG1) via the established communication link between the first operating device (BG1) and the second cloud-based service platform (SP2);
- Mutual assignment of the first ticket (TI1) and the second ticket (TI2) based on the respective contents and verification of the first ticket (TI1) and the second ticket (TI2);
- in the case of successful verification, transmitting the connection information (VI) relating to the first cloud-based service platform (SP1) from the second cloud-based service platform (SP2) to the first user device (BG1) via the established communication link between the first user device (BG1) and the second cloud-based service platform (SP2); and
- Establishing a communication connection between the first operating device (BG1) and the first cloud-based service platform (SP1) based on the connection information (VI) transmitted by the second service platform (SP2).

2. A method according to claim 1, further comprising:
- Transmission of data from the field device (FG), in particular diagnostic data, status data and/or measured values of physical variables of a process engineering process to the first operating device (BG1) via the established communication link between the first operating device (BG1) and the field device (FG);
- Transmitting the data of the field device (FG) from the first operating device (BG1) to the first cloud-based service platform (SP1) via the established communication link between the first operating device (BG1) and the first cloud-based service platform (SP1).

3. The method according to at least one of claims 1 or 2, wherein the connection information (VI) relating to the first cloud-based service platform (SP1) is transmitted to the field device (FG) via the established communication link between the first user device (BG1) and the field device (FG) and stored in the field device (FG).

4. A method according to claim 3, further comprising:
- Establishing a communication connection between a second operating device (BG2) and the field device (FG);
- Transmitting the stored connection information (VI) relating to the first cloud-based service platform (SP1) from the field device (FG) to the second user device (BG2) via the established communication link between the second user device (BG2) and the field device (FG);
- Establishing a communication connection between the second operating device (BG2) and the first cloud-based service platform (SP1) based on the connection information (VI) transmitted by the field device (FG).

5. Method according to at least one of claims 1 or 2, wherein the first user device (BG1) comprises an application application for controlling the method steps initiated by the first user device (BG1) with an online user administration (BV), wherein the user authenticates himself to the application application before executing the method and wherein the connection information (VI) relating to the first cloud-based service platform (SP1) is stored in the online user administration (BV) assigned to the user.

6. A method according to claim 5, further comprising:
- Provision of a second operating device (BG2), which second operating device (BG2) executes the application application;
- Authenticating the user to the application application;
- Establish a communication connection between the second operating device (BG2) and the field device (FG);
- providing the connection information (VI) related to the first cloud-based service platform (SP1) to the second operating device (BG2) through the online user administration (BV); and
- Establishing a communication connection between the second operating device (BG2) and the first cloud-based service platform (SP1) based on the connection information (VI) provided.

7. A method according to claim 4 or 6, further comprising:
- transmitting data from the field device (FG), in particular diagnostic data, status data and/or measured values of physical variables of a process engineering process to the second operating device (BG2) via the established communication link between the second operating device (BG2) and the field device (FG); and
- Transmitting the data of the field device (FG) from the second operating device (BG2) to the first cloud-based service platform (SP1) via the established communication link between the second operating device (BG2) and the first cloud-based service platform (SP1).

8. Method according to at least one of the previous claims, wherein a key pair (KY1, KY2) is created by the manufacturer during the manufacturing process of the field device (FG), wherein a private key (KY1) is written to the field device (FG) as part of the key pair (KY1, KY2) during manufacturing, and wherein the first ticket (Tl1) is signed by means of the private key (KY1).

9. Method according to claim 8, wherein the second ticket (TI2) is created by the manufacturer when the field device (FG) is ordered, and wherein the second ticket (TI2) is signed by means of a public key (KY2) as part of the key pair (KY1, KY2).

10. Method according to claim 9, wherein in the course of the verifying a mutual checking of the respective signature of the first ticket (TI1) and the second ticket (TI2) takes place, and wherein the verifying is only successful if the signatures are each successfully checked.

11. The method according to at least one of the preceding claims, wherein the first user device (BG1) or the second user device (BG2) must successfully authenticate itself to the field device (FG) in the course of establishing the communication link between the first user device (BG1) and the field device (FG) or in the course of establishing the communication link between the second user device (BG2) and the field device (FG).

12. Method according to at least one of the preceding claims, wherein the first operating device (BG1) or the second operating device (BG2) is connected to the field device (FG) via a radio link or a wired connection.

13. The method according to at least one of the preceding claims, wherein the first operating device (BG1) or the second operating device (BG2) establishes the communication connection to the first cloud-based service platform (SP1) and/or to the second cloud-based service platform (SP2) via the Internet.

14. Method according to at least one of the preceding claims, wherein a mobile terminal device, in particular a smartphone or tablet, or a computer unit, in particular a laptop, is used as the first operating device (BG1) or as the second operating device (BG2).

## Revendications

1. Procédé de connexion d'un appareil de terrain (FG) de la technique d'automatisation à une première plate-forme de service (SP1) basée sur le cloud, comprenant :
- établir une liaison de communication entre un premier appareil de commande (BG1) et l'appareil de terrain (FG) ;
- la lecture d'un premier ticket (TI1) à partir de l'appareil de terrain (FG) au moyen du premier appareil de commande (BG1) par l'intermédiaire de la liaison de communication établie entre le premier appareil de commande (BG1) et l'appareil de terrain (FG), le premier ticket (TI1) comprenant comme contenu au moins une information identifiant clairement l'appareil de terrain (FG) ;
**caractérisé en ce que** le procédé comprend les étapes suivantes :
- l'établissement d'une liaison de communication entre un premier dispositif de commande (BG1) et une deuxième plate-forme de service basée sur le nuage (SP2), la deuxième plate-forme de service (SP2) présentant un deuxième ticket (TI2), le deuxième ticket (TI2) présentant comme contenu au moins des données client et des informations de connexion (VI) concernant la première plate-forme de service basée sur le nuage (SP1) ;
- transmettre le premier ticket (TI1) à la deuxième plate-forme de service basée sur le cloud (SP2) depuis le premier dispositif de commande (BG1) via la liaison de communication établie entre le premier dispositif de commande (BG1) et la deuxième plate-forme de service basée sur le cloud (SP2) ;
- Associer mutuellement le premier ticket (TI1) et le deuxième ticket (TI2) en fonction de leur contenu respectif et vérifier le premier ticket (TI1) et le deuxième ticket (TI2) ;
- dans le cas d'une vérification réussie, transmettre les informations de connexion (VI) concernant la première plate-forme de service basée sur le nuage (SP1) depuis la seconde plate-forme de service basée sur le nuage (SP2) au premier dispositif de commande (BG1) par l'intermédiaire de la connexion de communication établie entre le premier dispositif de commande (BG1) et la seconde plate-forme de service basée sur le nuage (SP2) ; et
- établir une connexion de communication entre le premier dispositif de commande (BG1) et la première plate-forme de service basée sur le nuage (SP1) sur la base des informations de connexion (VI) transmises par la deuxième plate-forme de service (SP2).

2. Procédé selon la revendication 1, comprenant en outre
- transmettre des données de l'appareil de terrain (FG), notamment des données de diagnostic, des données d'état et/ou des valeurs de mesure de grandeurs physiques d'un processus technique de procédé au premier appareil de commande (BG1) par l'intermédiaire de la liaison de communication établie entre le premier appareil de commande (BG1) et l'appareil de terrain (FG) ;
- transmettre les données du dispositif de terrain (FG) du premier dispositif de commande (BG1) à la première plate-forme de service basée sur le nuage (SP1) par l'intermédiaire de la liaison de communication établie entre le premier dispositif de commande (BG1) et la première plate-forme de service basée sur le nuage (SP1).

3. Procédé selon au moins l'une des revendications 1 ou 2, dans lequel les informations de connexion (VI) relatives à la première plateforme de service basée sur le cloud (SP1) sont transmises à l'appareil de terrain (FG) par l'intermédiaire de la liaison de communication établie entre le premier appareil de commande (BG1) et l'appareil de terrain (FG) et sont stockées dans l'appareil de terrain (FG).

4. Procédé selon la revendication 3, comprenant en outre
- établir une liaison de communication entre un deuxième appareil de commande (BG2) et l'appareil de terrain (FG) ;
- transmettre les informations de connexion stockées (VI) concernant la première plate-forme de service basée sur le cloud (SP1) de l'appareil de terrain (FG) au second appareil de commande (BG2) par l'intermédiaire de la liaison de communication établie entre le second appareil de commande (BG2) et l'appareil de terrain (FG) ;
- établir une liaison de communication entre le deuxième dispositif de commande (BG2) et la première plate-forme de service basée sur le cloud (SP1) sur la base des informations de connexion (VI) transmises par le dispositif de terrain (FG).

5. Procédé selon au moins l'une des revendications 1 ou 2, dans lequel le premier appareil de commande (BG1) présente une application d'application pour la commande des étapes de procédé initiées par le premier appareil de commande (BG1) avec une gestion d'utilisateur en ligne (BV), dans lequel l'utilisateur s'authentifie vis-à-vis de l'application d'application avant l'exécution du procédé et dans lequel les informations de connexion (VI) relatives à la première plate-forme de service basée sur le nuage (SP1) sont enregistrées dans la gestion d'utilisateur en ligne (BV) en étant associées à l'utilisateur.

6. Procédé selon la revendication 5, comprenant en outre
- mise à disposition d'un deuxième appareil de commande (BG2), lequel deuxième appareil de commande (BG2) exécute l'application d'application ;
- Authentification de l'utilisateur vis-à-vis de l'application d'application ;
- établir une liaison de communication entre le deuxième appareil de commande (BG2) et l'appareil de terrain (FG) ;
- fournir les informations de connexion (VI) concernant la première plate-forme de service basée sur le nuage (SP1) au deuxième dispositif de commande (BG2) par l'intermédiaire de l'administration des utilisateurs en ligne (BV) ; et
- établir une liaison de communication entre le deuxième dispositif de commande (BG2) et la première plate-forme de service basée sur le nuage (SP1) sur la base des informations de liaison fournies (VI).

7. Procédé selon la revendication 4 ou 6, comprenant en outre :
- transmettre des données de l'appareil de terrain (FG), en particulier des données de diagnostic, des données d'état et/ou des valeurs de mesure de grandeurs physiques d'un processus technique au deuxième appareil de commande (BG2) via la liaison de communication établie entre le deuxième appareil de commande (BG2) et l'appareil de terrain (FG) ; et
- transmettre les données du dispositif de terrain (FG) du deuxième dispositif de commande (BG2) à la première plate-forme de service basée sur le nuage (SP1) via la liaison de communication établie entre le deuxième dispositif de commande (BG2) et la première plate-forme de service basée sur le nuage (SP1).

8. Procédé selon au moins l'une des revendications précédentes, dans lequel une paire de clés (KY1, KY2) est créée par le fabricant pendant le processus de fabrication de l'appareil de terrain (FG), dans lequel une clé privée (KY1) est écrite sur l'appareil de terrain (FG) comme partie intégrante de la paire de clés (KY1, KY2) pendant la fabrication, et dans lequel le premier ticket (TI1) est signé au moyen de la clé privée (KY1).

9. Procédé selon la revendication 8, dans lequel le deuxième ticket (TI2) est établi par le fabricant lors de la commande de l'appareil de terrain (FG), et dans lequel le deuxième ticket (TI2) est signé au moyen d'une clé publique (KY2) faisant partie de la paire de clés (KY1, KY2).

10. Procédé selon la revendication 9, dans lequel, au cours de la vérification, une vérification mutuelle de la signature respective du premier ticket (TI1) et du deuxième ticket (TI2) est effectuée, et dans lequel la vérification n'est réussie que si les signatures sont vérifiées respectivement avec succès.

11. Procédé selon au moins l'une des revendications précédentes, dans lequel le premier appareil de commande (BG1), respectivement le deuxième appareil de commande (BG2), doit s'authentifier avec succès vis-à-vis de l'appareil de terrain (FG) au cours de l'établissement de la liaison de communication entre le premier appareil de commande (BG1) et l'appareil de terrain (FG), respectivement au cours de l'établissement de la liaison de communication entre le deuxième appareil de commande (BG2) et l'appareil de terrain (FG).

12. Procédé selon au moins l'une des revendications précédentes, dans lequel le premier terminal de commande (BG1), respectivement le deuxième terminal de commande (BG2), est relié à l'appareil de terrain (FG) par une liaison radio ou une liaison filaire.

13. Procédé selon au moins l'une des revendications précédentes, dans lequel le premier appareil de commande (BG1), respectivement le deuxième appareil de commande (BG2), établit la liaison de communication avec la première plateforme de service basée sur le nuage (SP1) et/ou avec la deuxième plateforme de service basée sur le nuage (SP2) via l'Internet.

14. Procédé selon au moins l'une des revendications précédentes, dans lequel on utilise comme premier appareil de commande (BG1), respectivement comme deuxième appareil de commande (BG2), un terminal mobile, notamment un smartphone ou une tablette, ou une unité d'ordinateur, notamment un ordinateur portable.
